# EUROPÄISCHE PATENTSCHRIFT

(11) **EP 0 531 329 B1**
(45) Veröffentlichungstag und Bekanntmachung des Hinweises auf die Patenterteilung: **27.07.1994**
(21) Anmeldenummer: 91909381.5
(22) Anmeldetag: 22.05.1991
(51) Int. Cl.: B01J 20/34, B01D 53/02

(54) **VERFAHREN ZUR BEHANDLUNG VON SCHADSTOFFBELADENEN FESTKÖRPERPARTIKELN**
PROCESS FOR PROCESSING SOLID PARTICLES CONTAINING TOXIC CHEMICALS
PROCEDE POUR LE TRAITEMENT DE PARTICULES SOLIDES CONTENANT DES SUBSTANCES NOCIVES

(30) Priorität: 25.05.1990 DE 4016899
(43) Veröffentlichungstag der Anmeldung: 17.03.1993
(73) Patentinhaber: KLEINERMANNS, Karl, D-40591 Düsseldorf (DE)
(72) Erfinder: KLEINERMANNS, KARL, D-4000 DüSSELDORF 13 (DE); SCHMITT, Michael, D-6800 Mannheim (DE)
(74) Vertreter: Zahn, Roland, Dipl.-Ing.
(86) Internationale Anmeldenummer: DE9100416
(87) Internationale Veröffentlichungsnummer: WO9118671

(56) Entgegenhaltungen:
- DE-B- 1 021 836
- GB-A- 2 021 548
- US-A- 4 612 178
- US-A- 4 793 931
- US-A- 4 981 650
- Patent Abstracts of Japan, Band 11, nr. 30,(c-400)(2477),29. Januar 87 & JP-A-61 200 837 (EBARA)

## Beschreibung

Die vorliegende Erfindung bezieht sich auf ein Verfahren zur Behandlung von schadstoffbeladenen Festkörperpartikeln, insbesondere zur Entfernung von an den Festkörperpartikeln adsorbierten Schadstoffen, wie zum Beispiel chlorierten Kohlenwasserstoffen, Aromaten, Dioxinen.

Die Emissionen organischer Schadstoffe, insbesondere halogenierter Kohlenwasserstoffe, kondensierter Aromaten und Dioxine bereiten zunehmend human- und ökotechnische Probleme. Die technischen Maßnahmen zu ihrer Abscheidung und Zerstörung gestalten sich bislang schwierig und aufwendig.

Herkömmliche Verfahren sind für die Entfernung von an Festkörperpartikeln haftenden Schadstoffen weitgehend unbefriedigend und lassen sich grundsätzlich in zwei Verfahrensgruppen zusammenfassen, und zwar in "Abtrennung der Schadstoffe" und in "Zerstörung durch physikalisch/chemische/biologische Verfahren".

### Abtrennung von Schadstoffen

Zur Abtrennung von Schadstoffen aus Abluftströmen sind verschiedene Verfahren bekannt, von denen die Aktivkohle- und die Elektrofilter-Technik am weitesten verbreitet sind. Dabei werden die abzureinigenden Volumenströme durch die Filter geleitet; nach deren Sättigung aufgrund von Adsorption muß die mit Schadstoffen belastete Filtersubstanz oft auf Sondermülldeponien endgelagert werden. Dabei wird die Schadstoffproblematik letztendlich nur verlagert.

### Zerstörung von Schadstoffen

In vielen Fällen ist eine thermische Nachverbrennung von schadstoffbelasteten Festkörperpartikeln das Verfahren der Wahl, da damit die Schadstoffe in harmloses Kohlendioxid und Wasser sowie auswaschbaren Chlorwasserstoff überführt werden können. Hier muß allerdings ein Brennstoff zugegeben oder auf eine andere Weise Energie zugeführt werden, was oft ein unwirtschaftliches und Ressourcen verschwendendes Verfahren ist.

Die thermische oder katalytische Verbrennung ist aufwendig und insbesondere für kleinere Emittenten wie chemische Reinigungen, Druckereien und andere Industriebetriebe, die mit organischen Lösungsmitteln und Aktivkohlefiltern arbeiten, unpraktikabel. Hier ist eine aufwendige Rauchgaswäsche nötig und es treten öfter Korrosionsprobleme in den Anlagen, sowie Vergiftungen eines eventuellen Katalysators auf.

Biologische Verfahren zum Abbau von Schadstoffen an Festkörperpartikeln eignen sich nur bei einer konstanten und einfachen Schadstoffbelastung, sowie insbesondere zur Reduzierung beziehungsweise Beseitigung von Geruchsbelästigungen. Halogenierte Kohlenwasserstoffe werden von Mikroorganismen in der Regel nur sehr langsam abgebaut und eignen sich deshalb nicht zur technischen Umsetzung.

Die der vorliegenden Erfindung zugrunde liegende Aufgabe besteht darin, ein Verfahren zur Behandlung von schadstoffbeladenen Festkörperpartikeln anzugeben, das als Alternativlösung zu den bekannten, vorstehend gewürdigten Verfahren zu betrachten ist, und das einerseits eine deutliche Verbesserung im Hinblick auf die Abbaurate des Schadstoffanteils erbringt und das andererseits bezüglich der praktischen Anwendbarkeit keinen nennenswerten Beschränkungen unterliegt.

Die genannte Aufgabe wird im Prinzip dadurch gelöst,
daß die Festkörperpartikel mit energiereicher UV-Strahlung und mit Ozon oder Wasserstoffperoxid beaufschlagt werden,
und daß die Festkörperpartikel mittels eines Luftstroms aufgewirbelt einem Reaktorraum zugeleitet werden.

In vorteilhafter weiterer Ausgestaltung wird um auch schwerere Festkörperpartikel zu erfassen, d.h. am Absetzen im Reaktorraum zu hindern, dieser Reaktorraum partiell, vorzugsweise im Bodenbereich mit einer Ultraschallquelle gekoppelt (Anspruch 2).

Bei der UV-Oxidation von Schadstoffen in mit Festkörperpartikeln beladenen Abluftströmen handelt es sich um ein physikalisch/chemisches Verfahren zur Zerstörung der Schadstoffe. Dabei werden diese Schadstoffe bei Umgebungstemperatur und Normaldruck in Luft durch eine UV-photolytisch initiierte Radikal(ketten)reaktion oxydativ abgebaut. Hierzu werden die Festkörperpartikel der abzureinigenden Abluftströme mit UV-Lampen geeigneter Leistung und spektraler Verteilung bestrahlt. Die Reaktionsführung und Parametereinstellung muß daraufhin optimiert werden, daß als Endprodukte nur ungefährliche Stoffe wie Chlorwasserstoff, Kohlendioxid und Wasser entstehen. Saure Endprodukte wie zum Beispiel Chlorwasserstoff (HCl) werden dann durch eine konventionelle Naßwäsche entfernt.

Das erfindungsgemäße Verfahren ist letztlich im Gegensatz zu den anderen bekannten Verfahren apparativ weniger aufwendig und kann sich über on-line-Gasanalytik und über die Messung der UV-Absorption selbst regulieren.

Eine Erhöhung der Abbaueffizienz wird dabei - wie bereits erwähnt - durch zum Beispiel hochreaktive OH-Radikale aus der Photolyse von zugesetztem Wasserstoffperoxid (H₂O₂) oder von O(¹D) aus Ozon erreicht. Schwerflüchtige polycyclische aromtische (PAK) und chlorierte (CKW) Kohlenwasserstoffe, Furane und Dioxine, die im wesentlichen an Abluftstaubpartikeln beziehungsweise an Aktivkohle haften, werden durch UV-Bestrahlung der in einem Luftstrom aufgewirbelten Partikel beziehungsweise in situ in dem Abluftstrom abgereinigt.

Global betrachtet leistet das erfindungsgemäße Verfahren somit einen wesentlichen Beitrag zum Abbau von chlorierten Kohlenwasserstoffen, aromatischen Kohlenwasserstoffen wie Benzol, Toluol und Xylol (BTX), polycyclischen aromatischen Kohlenwasserstoffen (PAK), polychlorierten Biphenylen (PCB), Dioxinen und Furanen. Die UV-Oxidation von an Festkörperpartikeln haftenden Schadstoffen ist bei Zugabe von Ozon ein für diese Substanzklassen universell anwendbares Verfahren, das auch unter instabilen oder diskontinuierlichen Betriebsbedingungen als berührungsfreie Methode gute Ergebnisse liefert.

Ingesamt erweist sich die UV-Oxidation dort als von Vorteil, wo sich eine Rückgewinnung des Filteradsorbats nicht lohnt, wo komplexe Gemische von adsobierten Schadstoffen vorliegen, wo sich schnell ändernde Betriebsbedingungen herrschen oder in-situ Abbau berührungsfrei erfolgen muß. Das Schadstoffproblem wird dabei nicht - wie beim Stand der Technik - verlagert. Die genannten Bedingungen treten zum Beispiel in Schloten von Heizkraftwerken und Müllverbrennungsanlagen auf, in denen Flugasche zum Teil erheblich schadstoffbelastet ist und nach ihrer Abscheidung aufwendig endgelagert werden müßte. In vielen Filtersystemen der Chemie und Lösungsmittel verarbeitenden Industrie lohnt sich eine Rückgewinnung der an den Filterpartikeln haftenden Lösungsmittel- oder Schadstoffmoleküle nicht oder ist nicht möglich.

Gemäß den bisherigen Untersuchungen und Erkenntnissen treten bei der UV-Oxidation nur wenig Nebenprodukte auf, die zu dem besser biologisch abbaubar sind. Die Mineralisation festkörpergebundener Schadstoffe führt letztlich zu nicht oder wenig toxischen Abbauprodukten, wie Wasser, Kohlendioxid und Chloswasserstoff, der dann durch Wäsche mit verdünnter Natronlauge aus dem anfallenden Restgas entfernt werden kann.

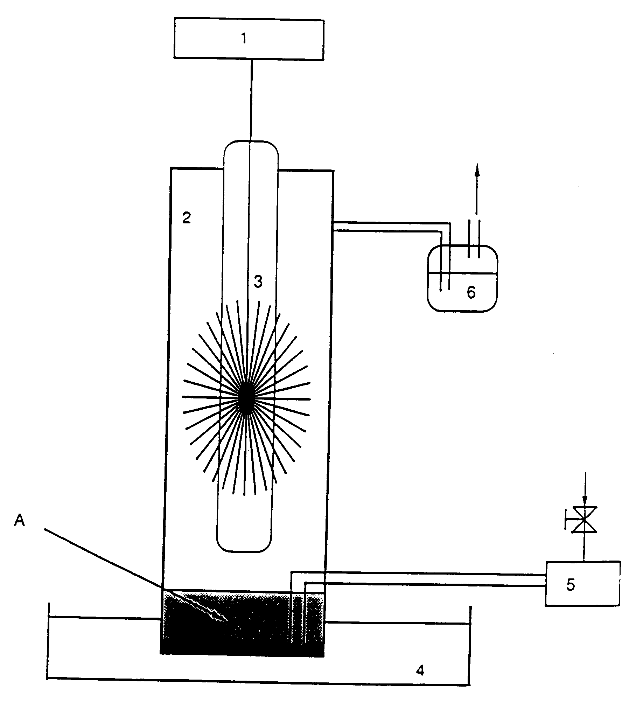

Das im Vorstehenden beschriebene Verfahren soll im folgenden anhand der in der Zeichnung dargestellten Apparatur nochmals erläutert werden:
In der in der Fig. dargestellten Apparatur wird die mit einer definierten Menge an Schadstoff beladene Aktivkohle A in einem über einen Massendurchflußregler 5 einem Versuchsreaktor 2 zugeführten Luftstrom verwirbelt und gleichzeitig mit UV-Licht einer Quecksilber-Hochdrucklampe 3 bestrahlt, die vom Zündspannungsgerät 1 gezündet wird. Der Versuchsreaktor 2 hat ein Volumen von 1,2 l, das effektive bestrahlte Volumen beträgt 150 ml, bei einer Bogenlänge von 4 cm der Entladungslampe. Die verwendete Quecksilber-Hochdrucklampe 3 hat eine Ausgangsleistung von 150 W.

Die bestrahlte Aktivkohle A wurde nach Beendigung des Versuchs aus dem Versuchsreaktor 2 mit 3 ml/g Schwefelkohlenstoff extrahiert und mittels eines Gaschromatographen analysiert..Um eine Verfälschung der Meßergebnisse durch in die Abluft austretenden abgedampften Schadstoff zu verhindern, wurde die Abluft in einem CS₂-Wäscher 6 extrahiert und analysiert.

Mit Perchlorethylen beladene Aktivkohle wurde auf diese Weise bestrahlt, wobei Abbauraten von über 90 % erreicht wurden. Diese Abbauraten beziehen sich auf die Menge der untersuchten Substanz nach der Bestrahlung im Vergleich zur unbestrahlten Probe. Hier bietet sich Benzol an, das bei den hier untersuchten Verweilzeiten von unter 10 Sekunden praktisch nicht abgebaut wird. Wird mit Benzol beladene Aktivkohle im Luftstrom verwirbelt und unter gleichen Bedingungen wie oben beschrieben etwa 10 Minuten bestrahlt, so wird etwa 40 % des adsorbierten Benzols abgebaut. Bei Zugabe von Ozon erfolgt eine noch effizientere Oxidation aufgrund der Photodissoziation von O₃ zu O₂ und elektronisch angeregten Sauerstoffatomen O(¹D) nach Anregung der Hartley-Bande bei 250 nm durch die Quecksilberlampe. Die O(¹D)-Atome oxidieren (chlorierte) Kohlenwasserstoffe extrem effizient und reagieren nahezu bei jedem Stoß. Für Benzol an Aktivkohle wird bei 10 Minuten Bestrahlungszeit, 150 W Lampenintensität und ≾ 1 % 03 eine Abbaurate von über 90 % erreicht. Die O₃-Konzentration wurde absolut über UV-Absorption bei 250 nm gemessen.

Auch chlorierte Aromaten, wie etwa Chlorbenzol oder Chlornaphtalin zeigen ähnliche Abbauraten bei den beschriebenen Verweilzeiten. Die Versuche zeigen auch, daß bei höheren Lampenintensitäten kürzere Verweilzeiten erreichbar sind.

Um mit dem erfindungsgemäßen Verfahren auch schwerere Festköperpartikel behandeln zu können, ist der Versuchsreaktor 2 in ein Ultraschallbad 4 gestellt. Damit wird verhindert, daß diese schwereren Festkörperpartikel gegebenenfalls am Boden des Versuchsreaktors 2 anbacken.

Die Wirbelschicht-UV-Oxidation von an Festkörperoberflächen adsorbierten Schadstoffen stellt im Vergleich zu herkömmlichen Methoden eine deutliche Verbesserung dar. Einerseits kann der Schadstoffabbau, zum Beispiel in Schloten von Müllverbrennungsanlagen oder Heizkraftwerken in situ erfolgen, so daß eine kostspielige Endlagerung der Filterstäbe als Sondermüll, und somit eine bloße Verlagerung des Schadstoffproblems entfällt. Andererseits kann das Verfahren verwendet werden, um schadstoffbelastete Aktivkohlefilter, wie sie zum Beispiel in Perchlorethylen und BTX (Benzol, Tolu ol, Xylol) verarbeitenden Betrieben auftreten, zu entgiften.

Bei der hier beschriebenen Methode handelt es sich um ein physikalisch-chemisches Verfahren, das bei Umgebungstemperatur genauso angewandt werden kann wie bei höheren Temperaturen und im allgemeinen bei Atmosphärendruck arbeitet.

Der physikalisch/chemische Prozeß selbst spielt sich dabei wie folgt ab:

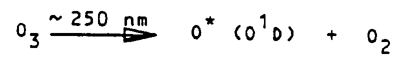

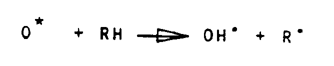

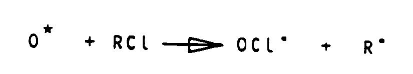

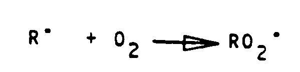

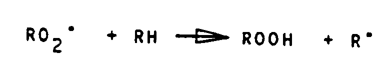

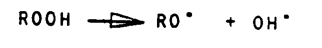

Es bildet sich vermutlich eine Radikalkettenreaktion aus, da mehr Radiakle durch die Reaktionen entstehen als eingesetzt wurden. Die weitere Oxidation bis zur Mineralisierung zu H₂O, CO₂ und HCl sind noch nicht im Detail bekannt. In Gegenwart von H₂O erfolgt Hydrolyse der gebildeten Fragmente zu CO₂ und HCl.

Es zeigte sich, daß man durch Trocknung der Festkörperpartikel durch die man eine Erhöhung der Zahl der aktiven Oberflächenplätze und/damit der reaktionsfähigen Moleküle erhält, die Abbaueffizienz deutlich verbessert. Dies zeigt, daß die photooxidative Mineralisierung von an Festkörperpartikeln adsorbierten Schadstoffen im wesentlichen an der Oberfläche und nicht in der Gasphase stattfindet.

## Patentansprüche

1. Verfahren zur Behandlung von mit organischen Schadstoffen beladenen Festkörperpartikeln, zwecks Entfernung von Schadstoffen, insbesondere chlorierten Kohlenwasserstoffen, Aromaten, Dioxinen,
wobei die Festkörperpartikel mit energiereicher UV-Strahlung und mit Ozon oder Wasserstoffperoxid beaufschlagt werden,
und wobei die Festkörperpartikel mittels eines Luftstroms aufgewirbelt einem Reaktorraum zugeleitet werden.

2. Verfahren nach Anspruch 1,
zur Behandlung schwerer und am Reaktorraum anhaftender Festkörperpartikel,
dadurch gekennzeichnet,
daß der Reaktorraum zumindest partiell mit Ultraschallwellen beaufschlagt wird.

## Claims

1. A process for the treatment of solid particles laden with organic contaminants for removal of the contaminants, particularly chlorinated hydrocarbons, aromates, and dioxins, the process comprising the steps of subjecting the solid particles to one of ozone and hydrogen peroxide, applying UV radiation to the solid particles, agitating the solid particles by means of an airflow, and passing the solid particles into a reactor space.

2. The process according to Claim 1,
for the treatment of solid particles, which are heavy and which adhere to the reactor space,
wherein the reactor space is acted upon at least partially by supersonic waves.

## Revendications

1. Procédé pour le traitement de particules de solides chargés de substances nocives organiques, dans le but d'éliminer des substances nocives, notamment hydrocarbures chlorurés, aromates, dioxines,
les particules de solides étant soumis aux rayons ultra-violets riches en énergie et à l'ozone ou à l'eau oxygénée,
et tourbillonés par un courant d'air et dirigés vers un enceinte du réacteur.

2. Procédé selon revendication 1,
pour le traitement de particules de solides lourdes et adhérentes à l'enceinte du réacteur,
characterisé par
le fait que l'enceinte du réacteur est alimenté - au moins partiellement - de sondes ultra-sonores.
